# EUROPEAN PATENT APPLICATION

(11) **EP 4 190 489 A1**
(43) Date of publication of application: **07.06.2023**
(21) Application number: 21306673.1
(22) Date of filing: 01.12.2021
(51) Int. Cl.: B24B 13/005

(54) **SYSTEM AND METHOD FOR BLOCKING AN OPHTHALMIC LENS WITH AN INSERT**

(71) Applicant: Essilor International, 94220 Charenton-Le-Pont (FR)
(72) Inventor: HO, Caroline, 94000 CRETEIL (FR); DUC, Olivier, 71350 Saint Loups Géanges (FR)
(74) Representative: Jacobacci Coralis Harle

(57) **Abstract**

The invention relates to a system (1) for blocking an ophthalmic lens (2) with an insert (3), said system comprising:
- a cover (10) forming a chamber, filled with a gas, in which the ophthalmic lens and the insert are bonded by a glue (4); and
- a control unit (20) adapted to control an oxygen concentration of the gas while the glue is polymerizing.

## Description

The invention relates to a system and method for blocking an ophthalmic lens with an insert.

It also relates to an optical article comprising an ophthalmic lens and an insert bonded by a glue.

### BACKGROUND INFORMATION AND PRIOR ART

Prior to surfacing an optical surface of an ophthalmic lens according to a given prescription, the opposite optical surface is blocked onto an insert. The ophthalmic lens is maintained by this insert during the surfacing process. In the alloy free blocking technology, the ophthalmic lens and the insert are structurally bonded by a glue which is classically polymerized by exposure to ultraviolet light. After the surfacing process, the glue is removed during a deblocking step.

However, even after exposure to ultraviolet light, residual glue which remains sticky appears where the glue is exposed to oxygen, typically at the periphery of the layer of glue. This sticky residual glue results from an incomplete polymerization of the glue due to oxygen, which is an inhibitor of the polymerization, surrounding the exposed parts of the glue. This sticky residual glue is difficult to remove during the standard following cleaning step. For instance, the residual sticky glue tends to leave traces on the ophthalmic lens which negatively impacts the cosmetic quality of the ophthalmic lens.

In order to remove the residual sticky glue, stronger or additional cleaning steps are implemented. Usually, these steps comprise wiping, brushing, or cleaning the glue with chemical containing solvents or caustic materials, sometimes used at high temperature (around 60°C), and/or using ultrasound cavitation. These solutions required the use of materials with safety and environmental risks.

### SUMMARY OF THE INVENTION

In this context, the invention proposes a system for blocking an ophthalmic lens with an insert, said system comprising:
- a cover forming a chamber, filled with a gas, in which the ophthalmic lens and the insert are bonded by a glue; and
- a control unit adapted to control an oxygen concentration of the gas while the glue is polymerizing.

Thanks to the system according to the invention, the polymerization of the glue is carried under a strict control of the oxygen concentration of the gas surrounding the glue. The oxygen concentration is controlled such that the polymerization of the glue is not inhibited by oxygen, which allows a complete polymerization of the glue.

Therefore, no residual sticky glue remains on the ophthalmic lens after exposition to UV light.

Consequently, cleaning is facilitated, and stronger or additional cleaning steps are not required, which provides a benefit in terms of cost saving, sustainability and time saving. Indeed, the overall productivity of the surfacing process can be increased as stronger or additional cleaning steps are not required.

Other advantageous and non-limiting features of the method according to the invention are:
- the control unit is adapted to maintain the oxygen concentration below a predetermined concentration while the glue is polymerizing;
- the control unit comprises an oxygen monitor adapted to measure the oxygen concentration;
- the system further comprises a lamp designed to emit ultraviolet light for polymerizing the glue, the lamp emitting light only when the oxygen concentration is being controlled by the control unit;
- the gas is an inert gas;
- the gas has a density higher than the density of air;
- the chamber is at least partly sealed while the glue is polymerizing;
- the chamber is at least partly sealed by the ophthalmic lens;
- the cover has a circular cylindrical inner surface which forms the chamber, and the ophthalmic lens is disk-shaped, the diameter of the ophthalmic lens being substantially equal to the diameter of the inner surface such that the chamber is at least partly sealed by the ophthalmic lens;
- the cover comprises an inlet adapted to flush the gas into the chamber, the control unit being adapted to control a pressure inside the chamber by commanding a flow of the gas through the inlet;
- the cover comprises an outlet adapted to let the gas exit the chamber, the outlet and the inlet being comprised in a plane substantially parallel to a mean plane of the ophthalmic lens;
- the control unit is adapted to control the oxygen concentration while the glue is being deposited, inside the chamber, on the insert or on the ophthalmic lens;
- the cover comprises an inner layer reflecting ultraviolet light.

The invention also relates to a method for blocking an ophthalmic lens with an insert comprising the steps of:
- placing the ophthalmic lens and the insert in the chamber filled with a gas,
- bonding the ophthalmic lens and the insert by a glue,
- controlling the oxygen concentration of the gas while the glue is polymerizing.

The invention also relates to an optical article, produced by the system and method, comprising:
- an ophthalmic lens,
- an insert bonded by a glue to the ophthalmic lens, the glue being fully polymerized.

### DETAILED DESCRIPTION OF EXAMPLE(S)

The following description with reference to the accompanying drawings will make it clear what the invention consists of and how it can be achieved. The invention is not limited to the embodiment illustrated in the drawings. Accordingly, it should be understood that where features mentioned in the claims are followed by reference signs, such signs are included solely for the purpose of enhancing the intelligibility of the claims and are in no way limiting on the scope of the claims. On the appended drawings:
- figure 1 is a schematic sectional view of a system for blocking an ophthalmic lens with an insert according to the invention,
- figure 2 is a schematic representation of the different steps of a method for blocking an ophthalmic lens with an insert according to the invention.

In the following description and claims, the verb "to comprise" is to be interpreted in an inclusive sense.

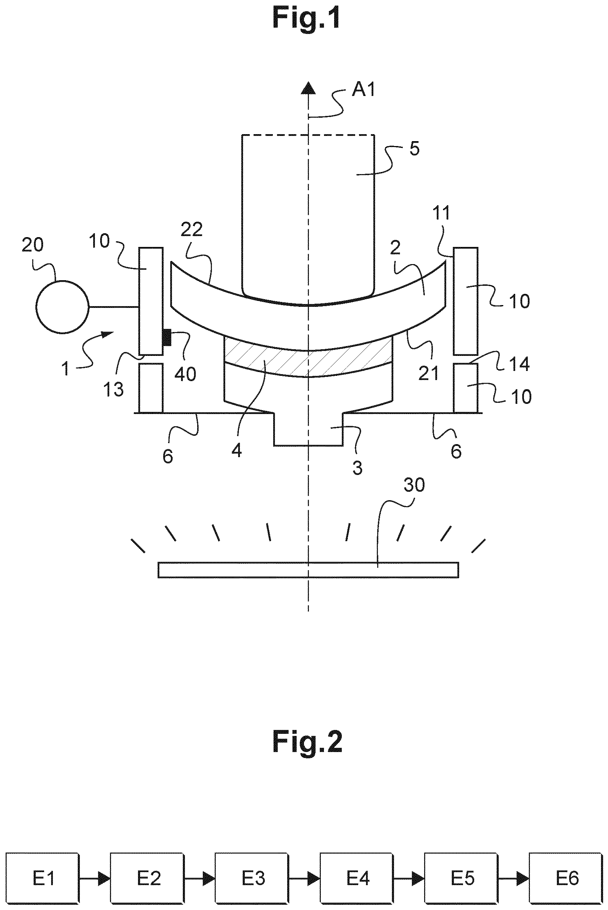

Figure 1 shows a system 1 for blocking an ophthalmic lens 2 with an insert 3 according to the invention. The system 1 is also called a "blocker". The system 1 comprises:
- a cover 10 forming a chamber, filled with a gas, in which the ophthalmic lens 2 and the insert 3 are bonded by a glue 4; and
- a control unit 20 adapted to control an oxygen concentration of the gas while the glue 4 is polymerizing.

As shown in figure 1, the system 1 also comprises a blocking head 5 adapted to hold the ophthalmic lens 2. The blocking head 5 for example comprises means, such as a suction cup, for removably maintaining the ophthalmic lens 2. The ophthalmic lens 2 might also be stuck to the blocking head 5. The blocking head 5 is for example provided at one end of a robotic arm designed to move the ophthalmic lens 2.

The ophthalmic lens 2 is a semi-finished lens in the sense that it comes from an injection molding step or a casting step and it still has to undergo at least one surfacing step. The ophthalmic lens 2 is globally disk-shaped. The ophthalmic lens 2 has two circular optical surfaces linked by a peripheral edge. The semi-finished ophthalmic lens 2 has a diameter which is typically comprised between 76 mm and 81 mm. The ophthalmic lens 2 is for example molded such as to provide a standard spherical power (for instance 1 or 2 diopters). As shown in figure 1, the ophthalmic lens 2 thus has a first optical surface 21 which is convex. The ophthalmic lens 2 is bonded to the insert 3 by the first optical surface 21. As a variant, the first ophthalmic surface might be flat.

The ophthalmic lens 2 and the insert 3 being "bonded" means that they are firmly attached or fixed to each other. More specifically, it means that ophthalmic lens 2 and the insert 3 are stuck to each other by the glue 4. The term "blocking" refers to the action of bonding the ophthalmic lens 2 on the insert 3.

The glue 4 is designed to polymerize under exposure to ultraviolet light, hereafter referred to as UV light. The glue 4 comprises polymers which are commonly referred to as "UV glues". UV light is required to trigger a radical polymerization of the glue 4. The glue 4 for example comprises an epoxy resin or a resin combining acrylate and methacrylate, in which photoinitiators are dispersed.

The polymerization of the glue 4, also called curing of the glue 4, corresponds to the hardening or solidification of the glue 4. Before polymerization, the glue 4 is viscous and can be deposited on the insert 3 or on the ophthalmic lens 2. While the glue 4 is polymerizing, the glue 4 becomes solid and starts binding the insert 3 and the ophthalmic lens 2 together. At the end of the polymerization, the glue 4 bonds the insert 3 and the ophthalmic lens 2.

The insert 3 allows holding the ophthalmic lens 2 during the surfacing step, here the surfacing of a second optical surface 22 opposite to the first optical surface 21. In the example illustrated in figure 1, the second optical surface 22 is concave. The insert 3 can be attached in a removable manner to a rotational axis and for example comprises means for engaging with the rotational axis. The insert 3 may also be used to hold the ophthalmic lens 2 during a trimming step of its peripheral edge. As shown in figure 1, the insert 3 is less large than the ophthalmic lens 2.

At the end of the blocking, i.e. when the glue 4 is polymerized, the glue 4 adheres to both the insert 3 and the ophthalmic lens 2 strongly enough to withstand mechanical stresses induced by the surfacing step. The ophthalmic lens 2 and the insert 3 being "bonded" therefore more specifically means that they are sufficiently attached to each other to withstand these mechanical stresses.

The chamber formed in the cover 10 is adapted to be filled with the gas and, simultaneously, to contain the ophthalmic lens 2 and the insert 3 when they are being bonded by the glue 4.

As shown in figure 1, the cover 10 is a hollow element in the sense that the cover 10 comprises a hole or a cavity extending through the cover 10. The cover 10 thus has, on the inside, an inner surface 11 which delimits the chamber. In the example illustrated in figure 1, the cover 10 is more particularly a hollow cylinder wherein the inner surface 11 extends along a circular cylindrical surface centered on a longitudinal axis A1 (which is vertical in figure 1).

The cover 10 comprises, at a first extremity of the hollow cylinder, an upper opening, hereafter referred to as "the opening", and, at the other extremity of the hollow cylinder, a lower opening. Here, as illustrated in figure 1, the lower opening is closed by a support 6 onto which lays the cover 10. As figure 1 shows it, the support 6 is substantially plan, orthogonal to the longitudinal axis A1, and comprises a hole in which the insert 3 is positioned. The hole and the insert are also centered around the longitudinal axis A1. The cover 10 may be fixed to the support 6, preferably in a removable manner, for example by means of screws. In this way, the cover 10 can then be taken out of the system 1, for example for maintenance.

As a variant, the cover is a cup-shaped element comprising a recess which forms the chamber. In this case, the cover comprises, in addition to the cylindrical inner surface, a circular bottom face facing the opening and sealing the bottom of the chamber. The bottom face may also comprise a hole to position the insert.

The cover 10 is here made of a monobloc piece of metallic material. The cover 10 is preferentially made of stainless steel to increase its durability. As a variant, the cover can be made of a plastic material. In this case, the cover is preferentially made of a material which is not sensitive to photodegradation such as acrylic or polycarbonate. The cover could also be 3D printed.

The chamber is an available space, in the sense that it is not filled by the cover 10, extending from the opening to the support 6. During the blocking, the insert 3 is positioned in the chamber, here against the support 6 as represented in figure 1, and the glue 4 lies on the insert 3. The chamber is larger than the insert 3 but the insert 3 may have a width close to the diameter of the chamber. This limits the internal volume of the chamber and therefore limits the volume of the gas for which the oxygen concentration is controlled.

As a variant, the cover and the chamber may have any other shape adapted for placing the insert 3, the ophthalmic lens 2 and the glue 4. For example, the chamber may have the shape of a parallelepiped.

The chamber is at least partly sealed, i.e. sealed or partly sealed, while the glue 4 is polymerizing. The chamber being "sealed" means that the opening of the cover 10 is closed. The chamber being "partly sealed" means that inputs or outputs of gas into or from the chamber are limited, for instance small or negligible leaks of the gas may be tolerated, in such a way that the oxygen concentration is still controlled. As a variant, "sealed" may mean that the chamber is totally hermetic.

The term "the gas" refers to the gas present in the chamber during the polymerization of the glue 4, that is to say the gas surrounding the glue 4 while it is polymerizing.

Here, the diameter of the opening is substantially equal to the diameter of the ophthalmic lens 2. Here, substantially equal means that the diameter of the ophthalmic lens 2 is slightly smaller than the diameter of the opening such that the ophthalmic lens 2 interlocks in the opening tightly enough to seal the chamber.

For example, the diameter of the opening is preferentially 0.1 mm to 5.0 mm larger than the diameter of the ophthalmic lens 2. When the diameter of the opening is 0.1 mm larger than the diameter of the ophthalmic lens 2, it is considered that the chamber is sealed by the ophthalmic lens 2. When the diameter of the opening is 5 mm larger than the diameter of the ophthalmic lens 2, it is considered that the chamber is partly sealed by the ophthalmic lens 2.

In this way, the chamber is at least partly sealed by the ophthalmic lens 2 itself while the glue 4 is polymerizing, which simplifies the sealing of the chamber. Figure 1 illustrates an embodiment wherein the diameter of the ophthalmic lens 2 is for example equal 81 mm and the diameter of the opening is for example equal to 85 mm such as to partly seal the chamber.

As figure 1 shows it, sealing the chamber this way (with the ophthalmic lens 2 itself) also limits the internal volume of the chamber, which consequently limits the volume of the gas for which the oxygen concentration is controlled.

In a general way, the cover 10 is designed, based on the ophthalmic lens 2 and the insert 3, in order to minimize the internal volume of the chamber.

As a variant, the ophthalmic lens may be larger than the opening but seal the chamber nevertheless by covering the opening. In this variant, the first optical surface is for example a regular convex surface having a symmetry of revolution. As a variant, the chamber may be sealed by an additional cap or may be put under a bell.

As shown in figure 1, the cover 10 comprises an inlet 13 adapted to bring a prime gas into the chamber. In other words, the prime gas can be flushed into the chamber through the inlet 13. The inlet 13 is hole, for example circular, made in the cover 10 and leading the inner surface 11. The inlet 13 may for example also extend through the support 6. When an additional cap is used, the inlet 13 may be formed in this additional cap.

The inlet 13 is for example connected through a pipe to a tank filled with the prime gas. The prime gas is for example under pressure inside the tank and may be injected in the chamber through the inlet 13 by controlling a valve located between the tank and the inlet 13.

The oxygen concentration of the prime gas is predetermined. As explained later on, this allows controlling the oxygen concentration of the gas inside the chamber. The prime gas is for example an oxygen free air. The prime gas is preferentially an inert gas such as nitrogen, argon, carbon dioxide or a mix thereof. The prime gas is preferentially a heavy gas. More specifically, the prime gas preferentially has a density higher than the density of air. Advantageously, the heavy prime gas stays inside the chamber even though the chamber is only partially sealed (since the opening is at the top of the chamber). When flushed into the chamber, the gas for example allows creating an inert atmosphere.

Preferentially, the inlet 13 is facing the glue 4 in the sense that it is positioned at the same height, along the longitudinal axis A1, as the glue 4. For instance, the inlet 13 is positioned at a height comprised between 0.0 mm to 0.5 mm above the highest point of the insert 3 along the longitudinal axis A1, i.e. in the direction of the ophthalmic lens 2. In this way, as illustrated in figure 1, the prime gas flows directly onto the periphery of the glue 4, that is to say an area of the glue 4 which needs protection from oxygen.

As shown in figure 1, the cover 10 also comprises an outlet 14 adapted to let the gas exit the chamber. The outlet 14 is an exhaust for the gas in the chamber. The outlet 14 is for example a hole which may be terminated by a controllable valve. The outlet 14 is also provided in the cover 10 on its inner surface 11. The outlet 14 could also be provided on the support 6 or on the additional cap. As a variant, the cover does not comprise an outlet, for instance when the chamber is only partially sealed during the polymerization of the glue 4.

The outlet 14 may be connected to a pumping system in order to reach a vacuum atmosphere (so without oxygen) in the chamber.

The outlet 14 and the inlet 13 are comprised in a plane substantially parallel to a mean plane of the ophthalmic lens 2. The mean plane of the ophthalmic lens 2 is for example the plan which best fits one of the optical surfaces. In figure 1, the mean plane of ophthalmic lens 2 is for instance parallel to the support 6. In other words, the outlet 14 and the inlet 13 are positioned at the same height in the chamber, for example with respect to the support 6. In this way, a flow of the gas from the inlet 13 to the outlet 14 circulates homogeneously around the glue 4. Preferentially, the distance between the outlet 14 and the inlet 13 is small, for example comprised between 1 cm and 5 cm.

As shown in figure 1, the system 1 comprises a lamp 30 designed to emit UV light for polymerizing the glue 4. The lamp 30 for example comprises one or more LEDs. The lamp 30 is here located below the cover 10 (that is to say, opposite to the blocking head 5), for example under the support 6, and oriented toward the chamber. Here, UV light goes into the chamber through the insert 3 which is made transparent to UV light. To do so, the insert 3 is for example made of acrylic. The support 6 may also be transparent such that UV light can also reach the chamber through the support 6. In a variant, the lamp may also be the support itself.

Here, the hollow shape of the cover 10 therefore allows the ophthalmic lens 2 to enter the chamber from one side and UV light from the other side.

An additional lamp may be positioned inside the chamber, preferentially circumferentially all around the glue 4. The additional lamp may be turned on and off at the same time as the lamp 30. The additional lamp improves the polymerization of the periphery of the glue 4.

In the variant wherein the cover is cup-shaped, the lamp may be positioned inside the chamber.

Advantageously, the cover 10 comprises an inner layer reflecting UV light. Here, the inner layer reflecting UV light is made of the inner surface 11 itself since the cover 10 is metallic. The inner layer may also be a thin metallic film deposited or coated on the inner surface 11. The inner layer allows deflecting more UV light toward the glue 4, which, in turns, accelerates and homogenizes the polymerization of the glue 4. The control unit 20 for example comprises one or more memories and one or more processors. The one or more memories have in memory instructions which, when implemented by the one or more processors, allow controlling the oxygen concentration of the gas while the glue 4 is polymerizing. In other words, the control unit 20 is programmed to control the oxygen concentration of the gas while the glue 4 is polymerizing.

The control unit 20 is connected to the inlet 13 and the tank such that the control unit 20 can control the injection of the prime gas into the chamber. For example, the control unit 20 controls the extent of the opening of the valve between the tank and the inlet 13. As a variant, for example when the prime gas is not under pressure in the tank, the control unit 20 may be connected to a pump adapted to pump the prime gas from the tank into the chamber.

The control unit 20 is also connected to the lamp 30 such that the control unit 20 can control the lighting of the lamp 30, i.e. turning the lamp 30 on and off. The control unit 20 is also connected to an oxygen monitor 40 adapted to measure the oxygen concentration of the gas inside the chamber. The oxygen monitor 40 for example comprises a probe, a sensor or any other device adapted to detect oxygen.

The control unit 20 can also be adapted to position the blocking head 5, and therefore to position the ophthalmic lens 2, for instance by controlling the robotic arm. As a variant, the blocking head might be controlled by an independent and dedicated control unit.

In a general manner, the control unit 20 controls the oxygen concentration of the gas inside the chamber while the glue 4 is polymerizing such that the polymerization of the glue 4 is not inhibited by oxygen.

As explained earlier, by maintaining a low oxygen concentration of the gas while the glue 4 is polymerizing, the polymerization of the glue 4 is not inhibited. Indeed, thanks to the strict control of the oxygen concentration, the edges of the glue 4 (which are neither in contact with the ophthalmic lens 2 nor the insert 3) are not in contact with oxygen or are in contact with so little oxygen that the polymerization is not hindered. No area of the glue 4 remains underpolymerized and sticky. The further removal and cleaning of the glue 4 is therefore facilitated.

In a first example, controlling the oxygen concentration of the gas means maintaining the oxygen concentration of the gas below a predetermined concentration while the glue 4 is polymerizing. The predetermined oxygen concentration is a value which may be expressed in several units. The predetermined concentration value is for example comprised between 1 ppm (parts per million) and 10000 ppm or between 0.0001 % and 1 % of the mass or volume of the gas, preferably between 100 pm and 1000 pm or between 0.01 % and 0.1 % of the mass or volume of the gas. The predetermined concentration may be chosen based on the duration of the polymerization. Typically, the longer the duration of the polymerization is, the lower the predetermined concentration is. The duration of the polymerization depends on the composition of the glue 4 and the intensity of UV light.

To do so, the control units 20 may monitor the oxygen concentration by means of the oxygen monitor 40. Then, the control unit 20 controls the injection of the prime gas into the chamber until the oxygen concentration of the gas decreases below the predetermined concentration. Advantageously, this allows to inject only the needed amount of the prime gas and therefore to save the latest. The gas inside the chamber when the glue 4 is polymerizing may then be a mix between air previously present inside the chamber and the prime gas injected through the inlet 13.

In a second example, controlling the oxygen concentration of the gas means completely filling the chamber with the prime gas. In other words, the prime gas completely replaces the air previously present inside the chamber. In this example, the gas inside the chamber while the glue 4 is polymerizing is the same as the prime gas. Since the oxygen concentration of the prime gas is predetermined, the oxygen concentration of the gas inside the chamber is controlled. The oxygen concentration of the gas is then more specifically equal to the oxygen concentration of the prime gas. The prime gas being preferentially an inert gas free of oxygen, the oxygen concentration of the gas inside the chamber is then close to zero, for example between 0.1 ppm to 30 ppm.

In the second example, controlling the oxygen concentration may then mean flushing continuously the prime gas into the chamber while the glue 4 is polymerizing. It may also mean vacuuming the chamber, for example thanks to a pump connected to the outlet 14, before filling the chamber with the prime gas and sealing it for the polymerization of the glue 4. It may also mean flushing the prime gas into the chamber, with the outlet 14 open, for a predetermined time period before sealing the chamber.

In a third example, controlling the oxygen concentration means maintaining an atmosphere free of oxygen in the chamber during the polymerization of the glue 4. This oxygen free atmosphere is for example achieved by using an inert gas as the prime gas (for instance argon) and by filling the chamber with the prime gas as explained in the second example.

In a fourth example, controlling the oxygen concentration means reaching a vacuum atmosphere in the chamber. Here, the vacuum atmosphere may be reached thanks to the pumping system connected to the outlet 14. In this fourth example, the whole cover 10 may also be put under a vacuum bell. The control unit 20 might be connected to a vacuum gauge adapted to measure the pressure inside the vacuum bell.

In a fifth example, controlling the oxygen concentration means capturing the oxygen present inside the chamber in order to reduce the oxygen concentration. To do so, the system 1 may comprise an oxygen filter, for example located at the outlet 14.

The control unit 20 is also adapted to control the emission of UV light, that is to say the lighting of the lamp 30, when the oxygen concentration is being controlled. Thus, the polymerization of the glue 4 starts when the oxygen concentration is adequate. For instance, the control unit 20 may trigger the lighting of the lamp 30 when the oxygen concentration has fallen below the predetermined oxygen concentration or after a given time period, for example 30 seconds of continuously flowing the primer gas into the chamber. As a variant, the lamp may be controlled independently from the control unit, for example by a manual switch.

The control unit 20 is also adapted to control the pressure inside the chamber. In a remarkable manner, building a moderate overpressure inside the chamber ensures that potential leaks (for instance when the chamber is partially sealed) are oriented from the chamber to the exterior of the chamber and not the other way around. Oxygen can therefore not penetrate the chamber in an uncontrolled manner while the glue 4 is polymerizing.

The pressure in the chamber may be regulated by controlling the flow of the prime gas through the inlet 13 and/or the exit flow of the gas through the outlet 14. The system 1 may comprise a sensor adapted to measure the pressure in the chamber which is located in the chamber and connected to the control unit 20. The control unit 20 here comprises a safety procedure wherein the outlet 14 can be largely opened to avoid dangerous overpressures.

Advantageously, the control unit 20 is also adapted to control the oxygen concentration of the gas in the chamber while the glue 4 is being deposited inside the chamber. For instance, the oxygen concentration may be controlled while the glue 4 is being deposited on the insert 3. To do so, the prime gas may have a density greater than the density of air and be steadily injected into the chamber. The prime gas thus naturally rests in the chamber (since the opening is at the top of the cover 10) and, in particular, around the insert 3 and the glue 4.

As illustrated in figure 2, the system 1 allows to implement a method for blocking the ophthalmic lens 2 with the insert 3. The method comprises the following main steps:
- placing the ophthalmic lens 2 and the insert 3 in the chamber filled with the gas,
- bonding the ophthalmic lens 2 and the insert 3 by a glue 4,
- controlling the oxygen concentration of the gas while the glue 4 is polymerizing.

More specifically, the method starts with a step E1 of placing the insert 13 in the chamber. As illustrated in figure 1, the insert 3 is placed in the hole provided in the support 6. The insert 3 is located at distance from the inner surface 11 and centered with respect to the chamber.

The method then continues with a step E2 wherein the glue 4 is deposited on the insert 3, here on a surface of the insert 3 opposite to the support 6. The glue 4 may be deposited on a central region of this surface but could also be spread on all this surface. During step E2, the polymerization of the glue 4 has not started yet and the glue 4 is fluid or viscous. The system 1 may comprise a dedicated conduit or syringe to deposit the glue 4.

Once the glue 4 is deposited on the insert 3, the method continues with a step E3 wherein the ophthalmic lens 2 is positioned at the opening such as to seal or partly seal the chamber but without touching the glue 4. To do so, the ophthalmic lens 2 is centered with respect to the chamber, that is to say around the longitudinal axis A1, and brought to the opening of the cover 10 in order to interlock with the opening. Here, step E3 is carried out by means of the robotic arm to which the blocking head 5 is fixed. At the end of step E3, the ophthalmic lens 2 is for example held between 1 cm and 2 cm above the insert 3.

The method then comprises a step E4 wherein the control units 20 starts controlling the oxygen concentration of the gas in the chamber. For example, as detailed above, step E4 may comprise maintaining the oxygen concentration of the gas below the predetermined concentration. Controlling the oxygen concentration before the ophthalmic lens 2 touches the glue 4 reduces the probability that underpolymerized portions of glue 4 remains on the first optical surface 21 since the first optical surface 21 is not contaminated with oxygen when touching the glue 4.

In a step E5, the ophthalmic lens 2 is brought in contact with the glue 4. Step E5 is for example triggered when the oxygen concentration is being controlled, for example when it drops below the predetermined concentration. When positioning the ophthalmic lens 2, the ophthalmic lens 2 is preferentially held parallel to the support 6 (and therefore parallel to the layer made by the glue 4). This prevents, thanks to the convex shape of the first optical surface 21, trapping air bubbles between the glue 4 and the ophthalmic lens 2. Here, step E5 is also carried out by means of the robotic arm to which the blocking head 5 is attached. Bringing the ophthalmic lens 2 in contact with the glue 4 may also participate in spreading the glue 4 on surface of the insert 3 opposite to the support 6, in particular when the glue 4 is deposited only on the central region of this surface.

Once the glue 4 is in contact with both the insert 3 and the ophthalmic lens 2, the polymerization of the glue 4 can be started and carried out in order for the glue 4 to bond the insert 3 and the ophthalmic lens 2 together.

The polymerization of the glue 4 is then performed in a step E6 which comprises the emission of UV light by the lamp 30. During step E6, the lamp 30 is turned on and the glue 4 polymerizes under exposition to UV light.

The oxygen concentration control is performed as long as the glue 4 is polymerizing. In other words, step E4 is performed all along step E6. Step E6 for example lasts between 1 second and 10 seconds. The duration of step E6 depends on the intensity of the UV light, the composition of the glue 4 and the quantity of the glue 4 deposited.

Here, step E6 is preferentially performed until the glue 4 is completely polymerized, i.e. until no portion of the glue 4 remains sticky. Step E6 may also be performed until a predetermined level of polymerization is reached. This predetermined level may be determined empirically thanks to a dedicated series of tests. The level of polymerization of the glue may be evaluated by differential scanning calorimetry measurements or by measurements of the tackiness of the glue 4. For instance, step E6 may be performed until a predetermined percent of the volume or of the mass of the glue 4 is polymerized, for example 90%.

At the end of step E6, the lamp 30 is turned off.

Controlling the oxygen concentration during the polymerization of the glue 4 is the main way to prevent an incomplete polymerization due to oxygen inhibition. However, in order to further prevent oxygen inhibition, oxygen concentration may also be controlled when the glue 4 is being deposited. The oxygen concentration is then controlled until the end of the polymerization. In this case, the prime gas is preferentially a heavy gas such as argon. In addition, in order to prevent even further the oxygen inhibition, the glue 4 may be stored in an environment where the oxygen concentration is also controlled.

As a variant, the oxygen concentration may be controlled only after the ophthalmic lens is brought in contact with the glue. In this case, the control unit may light the lamp only when the oxygen concentration drops below the predetermined concentration. In this case, the lamp emits light only when the oxygen concentration of the gas is being controlled.

Advantageously, the method according to the invention may be automated in the sense that no manual intervention on the system 1, such as manually handling the insert 3 or the ophthalmic lens 2, is required. As described above, the ophthalmic lens 2 may for example be handled by the robotic arm. In a similar way, the insert 3 may also be handled by robotic prehension tools.

The method according to the invention is not limited to the specific sequence of steps illustrated in figure 2. Indeed, placing the ophthalmic lens 2, the insert 3 and the glue 4 in the chamber may be performed in a plurality of ways and orders. For instance, the ophthalmic lens 2 may be firstly deposited on the support 6, then the glue 4 may be deposited on the ophthalmic lens 2 and finally the insert 3 positioned in contact with the glue 4. In this case, an additional cap may be used to seal the cover 10. Still in example, the glue 4 may be inserted between the ophthalmic 2 and the insert 3 when they are already in place in the chamber, i.e. their position represented in figure 1. However, in all conceivable variants, the oxygen concentration of the gas is controlled while the glue 4 is polymerizing.

The results of the method according to the invention is an optical article comprising the ophthalmic lens 2 and the insert 3 bonded together by the glue 4. In this optical article, the glue 4 in contact with the ophthalmic lens 2 is fully polymerized. Indeed, the oxygen concentration control prevents the oxygen inhibition of the polymerization. Preferentially, all the glue 4 is fully polymerized at the end of the blocking.

The system 1 is for example part of a fully automated surfacing and trimming station for ophthalmic lenses.

The system 1 is here illustrated with respect to an ophthalmic lens 2 whose diameter is substantially equal to the diameter of the chamber. However, the system 1 is also intended to be used with ophthalmic lenses whose diameter is larger or smaller than the diameter of the chamber. In this last case, the use of a heavy prime gas, for example combined with an additional cap or a continuous flushing of the prime gas, is preferential.

## Claims

1. System (1) for blocking an ophthalmic lens (2) with an insert (3), said system (1) comprising:
- a cover (10) forming a chamber, filled with a gas, in which the ophthalmic lens (2) and the insert (3) are bonded by a glue (4); and
- a control unit (20) adapted to control an oxygen concentration of the gas while the glue (4) is polymerizing.

2. System (1) according to claim 1, wherein the control unit (20) is adapted to maintain the oxygen concentration below a predetermined concentration while the glue (4) is polymerizing.

3. System (1) according to claim 1 or 2, wherein the control unit (20) comprises an oxygen monitor adapted to measure the oxygen concentration.

4. System (1) according to anyone of claims 1 to 3, further comprising a lamp (30) designed to emit ultraviolet light for polymerizing the glue (4), the lamp (30) emitting light only when the oxygen concentration is being controlled by the control unit (20).

5. System (1) according to anyone of claims 1 to 4, wherein the gas is an inert gas.

6. System (1) according to anyone of claims 1 to 5, wherein the gas has a density higher than the density of air.

7. System (1) according to anyone of claims 1 to 6, wherein the chamber is at least partly sealed while the glue (4) is polymerizing.

8. System (1) according to claim 7, wherein the chamber is at least partly sealed by the ophthalmic lens (2).

9. System (1) according to claim 8, wherein the cover (10) has a circular cylindrical inner surface (11) which forms the chamber and wherein the ophthalmic lens (2) is disk-shaped, the diameter of the ophthalmic lens (2) being substantially equal to the diameter of the inner surface (11) such that the chamber is at least partly sealed by the ophthalmic lens (2).

10. System (1) according to anyone of claims 1 to 9, wherein the cover (10) comprises an inlet (13) adapted to flush the gas into the chamber, the control unit (20) being adapted to control a pressure inside the chamber by commanding a flow of the gas through the inlet (13).

11. System (1) according to claim 10, wherein the cover (10) comprises an outlet (14) adapted to let the gas exit the chamber, the outlet (14) and the inlet (13) being comprised in a plane substantially parallel to a mean plane of the ophthalmic lens (2).

12. System (1) according to anyone of claims 1 to 11, wherein the control unit (20) is adapted to control the oxygen concentration while the glue (4) is being deposited, inside the chamber, on the insert (3) or on the ophthalmic lens (2).

13. System (1) according to anyone of claims 1 to 12, wherein the cover (10) comprises an inner layer reflecting ultraviolet light.

14. Optical article comprising:
- an ophthalmic lens (2),
- an insert (3) bonded by a glue (4) to the ophthalmic lens (2),
said glue (4) being fully polymerized.

15. Method for blocking an ophthalmic lens (2) with an insert (3) comprising the steps of:
- placing the ophthalmic lens (2) and the insert (3) in a chamber filled with a gas,
- bonding the ophthalmic lens (2) and the insert (3) by a glue (4),
- controlling the oxygen concentration of the gas while the glue (4) is polymerizing.
